# EUROPEAN PATENT SPECIFICATION

(11) **EP 3 525 575 B1**
(45) Date of publication and mention of the grant of the patent: **02.03.2022**
(21) Application number: 17805257.7
(22) Date of filing: 16.10.2017
(51) Int. Cl.: A01G 11/00, A01M 21/04, A01B 77/00

(54) **METHOD AND DEVICE FOR SOIL STEAM STERILIZATION**
VERFAHREN UND VORRICHTUNG ZUR BODENSTERILISATION MIT DAMPF
MÉTHODE ET DISPOSITIF DE STÉRILISATION PAR VAPEUR DE SOL

(30) Priority: 17.10.2016 IT 201600103899
(43) Date of publication of application: 21.08.2019
(73) Proprietor: Scotta, Marco, 10022 Carmagnola (TO) (IT)
(72) Inventor: Scotta, Marco, 10022 Carmagnola (TO) (IT)
(74) Representative: Karaghiosoff, Giorgio Alessandro
(86) International application number: PCT/IB2017/056397
(87) International publication number: WO 2018/073718

(56) References cited:
- EP-A2- 0 861 588
- WO-A1-00/05945
- WO-A1-2005/022983
- WO-A2-2007/054786
- US-A- 5 433 758
- US-A- 5 622 123

## Description

The present invention relates to a method and to a device for carrying out said method for soil steam sterilization.

Several alternative soil sterilization techniques are currently employed. Sterilization takes place as a treatment for preparing the soil to be sown with agricultural cultivation. It aims at killing parasites, pathogens and weeds.

Among currently used techniques one consists in using chemical or biochemical substances distributed on or in the soil. Such chemical and biochemical substances have the drawback of having no relevance with natural biological cycle and can take part in the production cycle and food cycle.

An alternative technique having a very low environmental impact on cultivation is soil steam sterilization.

Hot steam penetrating into the soil makes it possible, on a very large basis, to prevent and to treat all existing diseases in a very efficacious and wide manner. Steaming does not leave harmful or poisonous residuals in the soil and therefore it has no side effects on the environment.

Steaming technique has been efficacious over time and today it is the most safe and large method for soil disinfection. The operation is completely harmless and can be used with no damages and risks for operators performing the treatment on the soil and for the environment in all cultivation, gardening and vegetable fields.

Currently the application of steam to the soil occurs according to different methods. One provides high pressure hot steam to be distributed by means of feeding pipes provided on the soil or buried into the soil. Steam is generated by generators that provide high pressure hot steam and that supply it to distribution networks. All the above occurs by covering the soil surface under treatment with stem containing sheets.

Nowadays the proper use makes sheet steaming more easy and, despite the high energy demand, it becomes also economically justified particularly in small specialized horticultural farms. It is possible to steam areas up to 400 m² for each step, in about 4-5 hours, down to 25-30 cm depth and at a temperature up to 85°.

The advantage of such steaming system is the quite reduced price for the investment and its easy use, moreover, it gradually increases also working efficiency. However it is necessary to steam the ground up to 4 hours or even longer. This causes energy waste. For such reason this steaming method is also the type involving the most intensive use of energy.

With a typical steaming plant of the type described above, the consumption of fuel oil per m² is about 0.5 1 at 7-10 cm depth and 21 at 25-30 cm depth, which depends on steaming time and on soil characteristics. The soil reaches a temperature at most of 85°.

Generally for all the steaming techniques the following condition is valid:
1. The longer the steaming time is, the higher the energy waste and consequently also consumptions per m² are.
2. Steaming time is about 1-1.5 hours per 10 cm depth.

The method described above is completely not suitable for very large areas, therefore alternative techniques and machines for soil steaming treatment have been developed.

Large areas require big machines and the major technical challenge is a productive capacity as high as possible with an efficient use of energy, such to guarantee an economically suitable production.

For efficaciously sterilizing one hectare of soil and for controlling weeds currently about 20 tons of steam per about 6 cm steaming depth are necessary. This is a great effort for steam production as well as for steam injection in the soil.

Currently known apparatuses use a steaming process by means of which steam is injected in the soil through a row of dispensers/injectors while soil is spaded/ploughed, orienting the steam jets towards the area under treatment or towards the treated or dug area immediately adjacent to the spading/ploughing tool.

These machines, that can be of the trailed or self-propelled type, provide a steam generator therein connected to the nozzle feeding system and to a conventional rotationally driven spading roller.

Although these machines are functionally efficacious, there are still great limits as regards efficiency. Particularly forward movement speeds and therefore energy consumptions are still high when desiring to reach soil heating temperatures and/or hot steam penetration depths high or corresponding to the highest one mentioned above.

Document WO00/05945 discloses a prior art device that provides a tool for digging and working the soil, at least one nozzle being provided downstream thereof for injecting two substances intended to react together generating a soil sterilization or disinfection effect. Injectors are composed of tubes weighing by a lower end nozzle into the layer of worked soil and inject therein said two substances that exothermally react. One of said substances can also be steamed and/or heated. The system has the drawback of requiring chemical products to exert a sufficient soil sterilization or disinfection effect and of feeding the sterilization or disinfection substances inside the worked layer already laid down on the soil in the furrow downstream the tool that is dug thereby.

Apart from the use of sterilization and/or disinfection chemical substances, the method and device according to such document are not suitable for heating the soil up to temperatures necessary for sterilization or disinfection only by thermal effect, since feeding the substances even at hot steamed condition causes such substances to contact the soil and the loosened up soil layer that is still cold and therefore reducing the temperature of the steamed substance or substances making them inefficacious for hot sterilization or disinfection.

Document EP 0 861 588 A2 discloses a device and a method similar to that of WO00/05945. Also in this case two substances are fed in the soil at the soil worked by a tool and behind said tool with reference to the forward movement direction of the device.

Also in the device according to document WO2007/054786 three different substances are fed in the soil which are composed, at least for a part, of chemical substances. Two substances are freely distributed in the upper area of the soil working tool, while the third one is injected in the layer of soil laid down behind the tool in the furrow made by the tool.

Even in this case at least one of the substances can be steam or a steamed substance. However steam is alternatively freely distributed in the soil lifted by the tool or injected in the soil layer laid down in the furrow made by the tool. Also such device requires the combination of several substances to allow a sterilization or disinfection effect for the worked soil to be obtained since temperatures heating the soil are not enough to guarantee a heating based sterilization and/or disinfection effect.

The document WO2005/022983 provides also the only possibility of injecting the steam in the soil layer laid down in the furrow behind the tool and therefore as regards the efficacy of a thermal sterilization or disinfection it has the same drawbacks of devices described above.

Document US 5,433,758 discloses a method for controlling weeds and undergrowth and for treating plants in agricultural settings is disclosed. The method is characterized by first applying a spary of hot water to the plant, and then applying a foam blanket to the sprayed plants, whereby heat from the hot water spray is held against the plants.

Therefore the invention aims at providing a method for soil sterilization allowing efficiency of current methods to be increased and at the same time allowing treatment duration and energy consumption and therefore treatment cost per unit area of the soil to be reduced.

The invention achieves the above aims by a method for steam soil sterilization providing the following steps:
- working the soil with a spading or tilling roller which is rotated about its own axis and contemporaneously moving the spading roller forward by a translation in a direction perpendicular to the axis of rotation;
- contemporaneously feeding steam in the soil, with a predetermined pressure and with a predetermined temperature, in the soil area being worked by the spading roller or immediately adjacent to said spading roller;
   characterized in that
   said steam is fed from a shared horizontal manifold (3) by a row of tubes side by side with a predetermined length and distance one from the other extend, which tubes (2) are provided with steam dispensing nozzles (102) along their side walls,
   generating a cloud or grid or curtain of steam jets extending substantially vertically and tangent or it is secant to said spading roller, behind it and such to be passed through by the trajectories of the soil lifted up by the spading roller and projected behind it, obtaining a step heating the soil dug and lifted by the spading roller before falling back in the furrow behind the spading roller.

The spading roller is rotated about its own axis in a direction differing from the forward movement direction, that is in such a rotational direction that in the area in contact with the soil the direction of the spades is opposite to the forward movement direction and said steam being fed generating a curtain or grid of steam jets extending substantially vertically and tangent or it is secant to said spading roller such to be passed through by the trajectories of the soil lifted up by the spading roller and projected behind it, obtaining a step heating the soil dug and lifted by the spading roller before falling back in the furrow behind the spading roller.

According to a further characteristic the method provides steam to be supplied by generating a vertical dispensing curtain parallel to the axis of the spading roller.

In one embodiment such curtain is composed of a plurality of steam dispensing jets aligned, side by side with each other on a line parallel to the axis of the spading roller and arranged on a grid.

As an alternative or in combination, the method provides to delimit towards the outside a region housing the spading roller leaving it open towards the soil and to inject the steam inside said delimited region.

Preferably the delimitation is provided along a curved cup or bell-like wall parallel to the axis of the spading roller forming a kind of inverted channel with the opening towards the bottom and said wall is provided with end side walls substantially transverse to the axis of rotation of the spading tool, remaining open only towards the side facing the soil.

The creation of the wall or curtain or grid of high temperature steam jets is obtained by an arrangement of the steam dispensing nozzles providing each dispensing nozzle to be coincident with a knot of a grid of knots.

Still according to a further characteristic, the method provides to cover the soil downstream the injection area and preferably downstream a region behind the spading or tilling roller wherein the loosened up material falls on the worked soil and where steam has been injected.

Such mulching is preferably performed by laying down sheets made of plastic material and/or other types of fibers retaining the steam.

The invention relates also to a sterilizing device, for carrying out said method, namely for soil steam sterilization which comprises:
at least one spading roller supported so as to rotate about its axis and rotationally driven by a motor;
a steam generator with a predetermined pressure and with a predetermined temperature;
one or more nozzles feeding the steam generated by said generator for treating the soil being worked by the spading roller and/or the worked area of the soil immediately adjacent thereto;
motorized means for translating said spading roller, the steam generator and the nozzles,
characterized in that
steam dispensing nozzles are fed by a shared horizontal manifold (3) and arranged along side walls of a row of tubes side by side with a predetermined length and distance one from the other extend,
such to form a steam curtain or cloud extending substantially vertically and tangent or it is secant to said spading roller, preferably behind it and such to be passed through by the trajectories of the soil lifted up by the spading roller and projected behind it, obtaining a step heating the soil dug and lifted up by the spading roller before falling back in the furrow behind the spading roller.

According to a further characteristic at least some steam dispensing nozzles are oriented such to feed or inject steam into the furrow or hollow generated behind the spading roller by its digging action.

One embodiment provides the spading roller to be driven so as to rotate about its own axis in a direction opposite to the translation direction.

One constructional form provides a row of substantially vertical tubes which are supported as to project by their lower ends towards the soil and which tubes are arranged in a position side by side at predetermined distances from one another, while each tube is connected to a steam feeder and each tube bears a nozzle injecting the steam in the soil layer laid down downstream the spading roller and arranged along the axial extension of the tube it bears one or more crowns of dispensing holes or nozzles emitting the steamed fluid.

Thus not only soil is heated by the steam curtain or wall while soil is projected in the circumferential direction of the spading roller, pre-heating the soil, but at the same time it is injected into the thickness of the soil laid down in the furrow dug by the roller, downstream said roller. Since the soil falling in the furrow has been subjected to a very close heat exchange with the steam or steamed fluid of the steam or steamed fluid curtain and it is already pre-heated at a given temperature, therefore the efficacy of injection of the fluid steamed by the lower nozzles directly in the soil layer allows optimal heat exchanges and very high temperatures of the soil and thermal sterilization and disinfection effect to be achieved.

According to a further characteristic the spading roller and the dispensing nozzles are closed in a guard that is open towards the soil side and is closed on the other sides and which guard delimits in the forward movement direction a front area where the roller penetrates in the soil by lifting the material and an area behind the roller where the material loosened up by the roller is projected by it again on the soil, steam injection being performed alternatively or in combination both in the front area and in the rear area or within the guard.

Preferably the delimitation is provided along a curved cup or bell-like wall parallel to the axis of the spading roller forming a kind of inverted channel with the opening towards the bottom and said wall is provided with end side walls substantially transverse to the axis of rotation of the spading tool, it remaining open only towards the side facing the soil.

One embodiment provides the distribution of nozzles to generate a vertical steam curtain extending substantially for the whole height of the delimiting wall immediately behind the spading roller and for a width substantially corresponding to the whole extension in the forward movement direction on the soil, while the lower nozzles are oriented such to generate injection jets in the thickness of the furrow dug by the spading roller immediately behind said roller with reference to the forward movement direction of the device along the soil, substantially before said furrow becomes filled with the soil material lifted and thrown rearwards by the spading roller.

Still according to one characteristic the rear end portion of the cup containing the sterilization or disinfection fluid is provided in the form of a shoe or tracer point or doctor blade mounted so as to be height displaceable with respect to the containment cup and which is vertically displaceable such to regulate the thickness of the soil dug by the spading roller, such to set different digging depths in the soil and to generate different thicknesses of the soil layers laid down downstream the spading roller.

Still according to a characteristic the device can provide in combination a unit for unrolling and laying down on the soil a sheet of mulching material.

One embodiment of such unit can comprise a roll of said sheet mounted on rotating supports allowing the roll to rotate about its own axis and which roll is arranged parallel to the spading/tilling roller.

Supports can be idle rotating supports.

According to a further characteristic it is possible to associate to the roll guiding, pressing rollers that hold the sheet unrolled on the soil downstream the roll, with reference to the forward movement direction.

The sterilization device can be made as independent implement without its own propulsion means and possibly without motorization for driving the spading/tilling roller. In this case translation motorized means can be composed of a tractor or another independent vehicle that has at least one power takeoff and means for removably attaching the device cooperating with corresponding means associated to the device.

The steam generator can be provided in this case, as an alternative, as an implement of the vehicle intended to drive the sterilization device or on the device itself.

As an alternative the sterilization device can be part of a self-propelled unit composed of a vehicle, the sterilization device being an integral part thereof.

The vehicle that can be a wheeled vehicle or a tracked vehicle can also bear the steam generator.

In one variant embodiment that can be provided both for the device trailed by a separate vehicle and for the device integrated in a vehicle, the steam generator can comprise one or more tanks for water necessary to generate steam.

In this case, in the embodiment of the device as an implement trailed by a separate vehicle, the generator can be also made as an implement that can be mounted and removed from said vehicle by using a frame of the generator provided with hitches for attachment to implement coupling means provided on the vehicle, such as for example hitches for additional units provided on tractors or on other agricultural vehicles.

Still according to a further characteristic in order to limit the weight of the device and/or of the combination of device, vehicle and steam generator it is possible to provide a steam generator comprising a limited capacity tank and that acts as a buffer tank to which water for steam generation is supplied through a flexible hose and a delivery pump, which flexible hose is wound as a coil on a wheel rotatable about an axis transverse to the forward movement direction and connecting to a stationary water intake, it being unwound from said coil contemporaneously with the forward movement of the device on the soil.

According to a characteristic the wheel can be idle rotatable in the unwinding direction and it can be motorized for recovering and winding the hose.

As an alternative the wheel can be always motorized and controlled both for unwinding and winding the hose and in a synchronized manner with the displacement of the device on the soil for example by means of tension sensors for the hose.

According still to a further alternative embodiment that can be provided in combination with the variant embodiment of the device made as an implement connectable to a power unit or with the variant embodiment where the device is self-propelled, that is integrated firmly in a vehicle, the steam generator, with at least the buffer tank or with the tank for the water to be steamed is made as a separate device in the form of a unit trailable by a power unit or as a self-propelled unit and the delivery of the steam is connected by a hose, possibly also woundable and unwoundable from a coil, to steam injectors/nozzles associated to the sterilization device.

In this case the steam generator can be placed still or fixed in a predetermined point of a soil to be treated, while the sterilization device is trailed on the soil by a power unit or by the vehicle wherein it is integrated, steam injectors being connected by a flexible hose to the generator. When such generator is placed in a central area of the region of the soil to be treated then by a predetermined length of the flexible hose supplying the steam it is possible to work substantially double distances from the generator with respect to the length of the flexible hose.

According to a further variant, the generator in turn can be supplied through a hose with water taken from a water supply intake.

From the above the advantages of the present invention are clear.

By the use of a spading/tilling roller that is rotated with a rotational direction differing from the direction trailing or translating it on the soil, the soil is loosened up with a higher efficiency and deeper. This allows a higher rotational depth to be obtained. Moreover the rotation of the roller in a different direction causes the loosened up material to be reversed or overturned from the front side of the roller towards the rear side, with reference to the forward movement of the device. Such material falls down in the soil covering in a more efficacious and uniform manner the furrow made by the spading roller and capturing the steam in said furrow under the layer of soil loosened up and laid down to fill in the furrow. The fact of providing a steam curtain contained in a closed environment and forms a cloud or a wall or a curtain of hot steam directly behind the spading roller and that has to be passed through by the soil projected rearwards and pulverized by the spading roller leads to the soil being already heated before falling down in the furrow and capturing the additional steam discharged from the lower nozzles in the furrow, therefore much higher temperatures heating the soil are obtained reaching levels about of 100° and higher. By means of this a higher sterilization and disinfection efficacy is obtained that cannot be obtained by the know devices whereby in these devices it is necessary to combine heat also with chemical substances with sterilizing and disinfection effects. These latter are the primary sterilization means and are only assisted by the heat and/or by steaming for promoting activation and/or reaction. In the device according to the present invention, the combined action of heating of the soil loosened up by the spading roller while it is still on the projection trajectory and before falling on the soil and the effect injecting the steam also in the furrow directly behind the spading roller and the capture by covering the soil projected rearwards by the spading roller and heated by the steam curtain allows not only depth and temperature to be improved, but allows also higher forward movement speeds and processing speeds to be obtained compared to those that can be currently obtained, thus reducing the energy consumption necessary for the treatment and therefore the cost of the treatment per unit area to be treated.

The invention exhibits further characteristics that are the subject matter of the dependent claims.

These and other characteristics and advantages of the present invention will be more clear from the following description of some embodiments shown in the annexed drawings in which:
Fig.1 is a schematic view of a device for the sterilization of the soil by steam according to the present invention.
Figure 2 is the device of figure 1 associated with a trailing vehicle for example a tractor, a power unit, or the like.
Figure 3 is a variant embodiment of the device according to the present invention wherein said device is integrated as a fixed component of a self-propelled vehicle.

With reference to the previous introductory part of the description and to the following detailed part as well as to claims, the device is described in its general schematic arrangement since the constructional structure of the mechanical parts, such as the spading or tilling roller, for example of the blade holding rotor type, the rotational driving means, the guard structure, the steam injection nozzles, the steam generating means, the structure of the trailing vehicles in the described variants and other constructional characteristics, such as removable attaching means, power takeoff for transmitting the driving motion etc. are widely known in the sector of agricultural equipment and are within the technical basic knowledge of the person skilled in the art.

Particularly the structure of the device as regards the combination of a guard having a cup-like cross section and housing therein a blade holding rotor and the transmission rotationally driving it is widely known in the sector of agricultural equipment as regards for example tillers, equipment called as rock pickers and other operating equipment for soil treatment.

Moreover the term spading or tilling roller has not to be intended in a manner limited to the described task, but it designates a general rotor having a predetermined axial length and rotationally driven about its own central axis, which rotor is provided on its periphery with a plurality of teeth, blades or other elements projecting radially from the shell of the rotor and that are arranged along said shell surface according to a specific arrangement pattern. Said teeth, blades, spades, shovels or the like are intended to penetrate with force in the soil by loosening up the material thereof, lifting it up and making it falling again on the soil with a flight trajectory in a direction opposite to the forward movement direction of the roller on the soil.

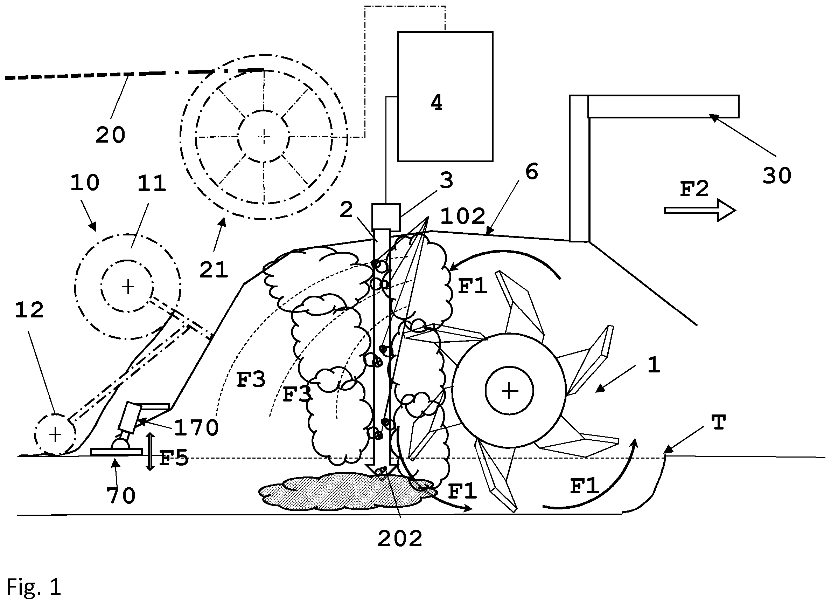

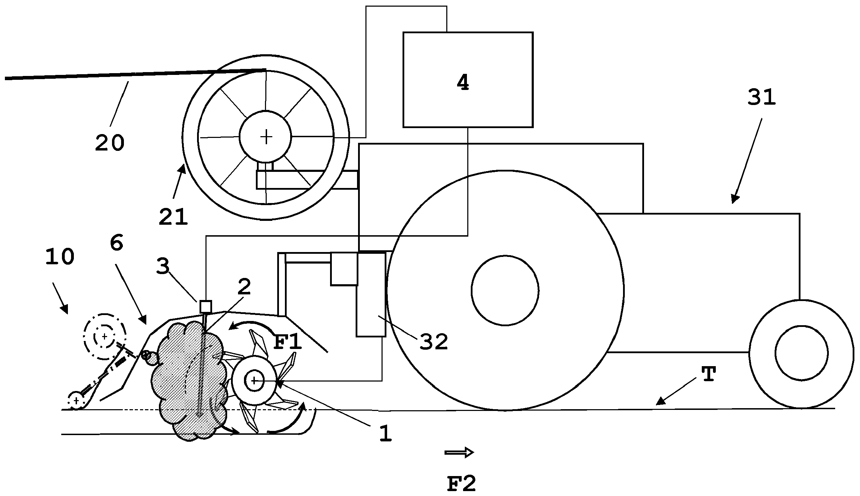

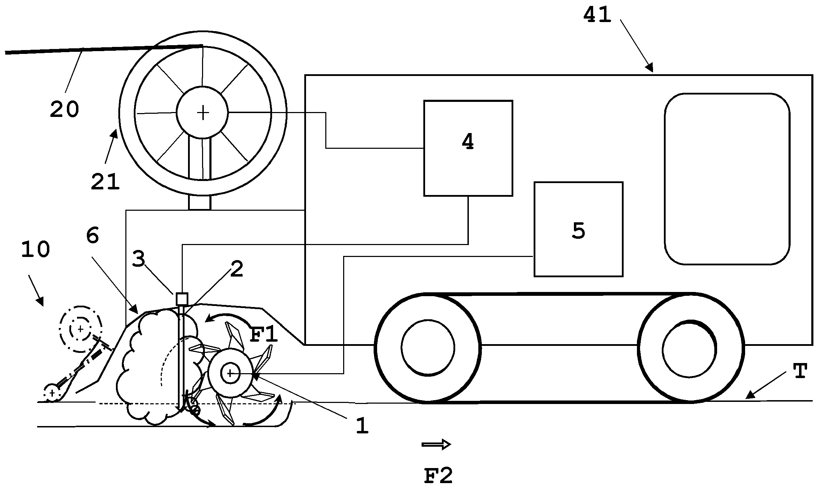

With reference to figure 1 it shows a device for sterilization by the combined action of heating, by a steam cloud or curtain, the soil thrown upwards and minced or pulverized by the spading roller while it is still in the air and of injecting steam in the furrow directly behind the spading roller that is covered and captured in said furrow by the soil layer falling into the furrow.

The device comprises a spading, tilling roller 1 provided with shovels, blades, spades or the like radially projecting from the shell surface thereof and intended to bite into the soil T.

The spading roller 1 is supported so as to rotate about its own central axis A and it is rotationally driven by motorized means (not shown in details since being part of the technical basic knowledge of the person skilled in the art).

The spading or tilling roller 1 is driven so as to rotate in the direction of arrows F1. The spading roller 1 is dragged along the soil to be worked such to perform a forward translation along the soil denoted by arrow F2. As it is clear the forward movement direction of the roller on the soil defined by arrow F2 differs from the direction of rotation of the roller 1 denoted by arrows F1. Therefore the tangent motion component in the lower area of the roller 1 is opposite to the forward movement direction F2 and it promotes blades of the roller 1 penetrating in the soil at a greater extent.

A hot steam dispensing unit is associated to the spading roller 1, which unit can have different shapes alternative to one another or combined with one another and that supplies and supports directly behind the spading roller 1 a plurality of nozzles 102 dispensing steam at high temperature, preferably higher than 100°C, which are arranged such to generate behind the spading roller 1 a curtain of high temperature steam denoted schematically by icons in the form of clouds in the figure and by letter N.

In one embodiment as the one shown herein, a battery of dispensers 2 extending from a manifold bear vertical rows of nozzles 102 provided at predetermined vertical and horizontal distances one from another, said distances being selected in such a manner to generate a curtain of hot steam jets side by side, vertically oriented behind the spading roller 1 and substantially coincident with the path of rearward projection of the soil by the blades of the spading roller 1, therefore said soil thrown rearwards in a minced or pulverized form is forced to pass through the high temperature steam it being heated and being subjected to a preventive step of sterilization and disinfection thermal treatment.

In the invention from a shared horizontal manifold 3 a row of tubes side by side with a predetermined length and distance one from another extend, which tubes 2 are provided with steam dispensing nozzles 102 along their side walls.

According to one embodiment each tube can have, at each section plane, a crown of nozzles 102 arranged at a predetermined distance from one another along the circumference of the tube 2.

According to one embodiment at the lower end oriented towards the soil and preferably ending inside the furrow dug by the spading roller 1, each tube 2 has a lower nozzle 202 oriented towards the soil and acting for injecting steam in said furrow.

Tubes 2 and nozzles 102, 202 can be oriented on more than one angle and/or can be provided on several rows and also be oriented such to generate hot steam jets directed towards the area the roller 1 is working or as an alternative or in combination also towards the area immediately downstream the one under treatment, namely the area just treated by the roller 1.

The manifold 3 is supplied by a steam generator generally denoted by 4, and it is not described in details since also such steam generator has a construction known by the person skilled in the art.

According to one embodiment, the row of tubular elements 2 side by side is parallel to the axis of the spading roller 1 and the tubes extend substantially vertically.

The roller 1 and the steam nozzles, namely in the present embodiment the tubes 2 with the side nozzles 102 and lower nozzles 202 are housed underneath a covering guard 6 that has a curved cross section, like a cup and extending for the whole axial length of the roller 1 and/or of the battery of dispensers. The guard 6 is open at the bottom and it conveys together with shovels, blades or the like of the spading or tilling roller 1 the loosened up material towards the area downstream the roller 1 as denoted by dashed lines F3. Such action is promoted by the direction of rotation of the roller 1 allowing the blades to give to the loosened up material an initially lifting trajectory up to the top area of the roller 1 and then a trajectory projecting said material rearwards and downwards.

The guard 6 further delimits a compartment treating the material loosened up by the roller 1 provided behind the roller 1 with reference to the forward movement direction and that holds hot steam preventing it from being spread in the environment and from being cooled down and while increasing the contact with the soil projected rearwards and minced or pulverized by the roller 1.

Advantageously the guard 6 is composed of a curved wall whose shape substantially corresponds to or is parallel or concentric to the trajectories of the soil caused by soil being projected rearwards by the spading roller 1.

Still according to one embodiment, figure 1 shows a rear doctor blade or leveller 70 that can be raised and lowered by linear actuators 170 such as approximately shown in figure 1 by actuating cylinders. Said doctor blade or said leveller have a length substantially corresponding to the length of the spading roller and they level and compact the soil at the rear end of the guard 6 increasing the action contacting and capturing the steam in the furrow with the soil filling it. Moreover by lowering or lifting said leveller 70 it is possible to adjust the digging depth of the spading roller 1, adapting it to contingent conditions of the soil. The arrow F5 shows said lifting or lowering movement.

In figure 1 numeral 10 denotes an optional unit laying down a mulching sheet downstream the rear side of the guard 6 and on the treated soil. Such optional unit shown by dashed lines is known in the sector and it comprises a roll of mulching sheet 11 supported so as to rotate about its own axis on rotating supports. The roll 11 is placed with its axis parallel to the axis of the spading roller 1 and it is possible to associate thereto spreading systems generally and schematically denoted by the spreading roller 12.

The steam generator generally denoted by 4 can have one or more tanks for water to be steamed. Tanks determine a limited autonomy of the device and have to be refilled after a given working time of the device. Moreover too big tanks generate a considerable load on the soil.

According to a variant embodiment shown by dashed lines, the generator can have at least one buffer tank with a given capacity which is connected through a flexible hose 20 to a water supply intake. The flexible hose 20 is wound on a wheel or a rotatable core of a coil 21 from where it can be unwound and wound in a manner corresponding to the distance of the device from the water intake to which the free end of the flexible hose 20 is connected.

Motorized means rotatably driving the coil 21 in combination with sensors can rotationally drive the coil in the unwinding and winding direction in a manner synchronized with the forward movement of the device on the soil. Also such means are widely known in prior art and are not part of the present inventive teaching.

In the schematic view of figure 1 the device is in the form of an implement trailable by a power unit for example a tractor and it has means removably hitching to said power unit denoted by 30.

Moreover in combination, as indicated in figure 2 the power unit 31 has a power takeoff 32 to which a transmission is dynamically connected to rotationally drive the spading roller 1.

In figure 2, the power unit 31, for example a tractor or the like, has hitch means 33 complementary to those 30 of the sterilization device. The generator 4 and the possible coil of flexible hose, as well as steam generating units and possible motors driving the flexible hose coil are mounted on the power unit 31. These can be firmly integrated therein or can be made as units removably mountable on the power unit 1 as an additional implement provided in combination with the device according to one or more of the variants described above and comprising at least the spading roller 1, the guard 6, injectors 2 and manifold 3.

In the embodiment of figure 3 the device according to one or more of the preceding variants of the present invention is firmly integrated in a vehicle 41 that is shown by way of example as a tracked vehicle. In this embodiment the vehicle comprises firmly integrated in its structure at least the guard 6, the roller 1, steam injectors 2, 102, 202 and the circuit 3 with the steam generator 4, the possible flexible hose coil with service motors and sensors associated thereto, namely all parts composing the device described with reference to figure 1 according to one or more of the variants described above and both in stable manner and as optional units. 5 denotes a motor or several motors operating as propulsor moving forward the vehicle 41 and/or for driving the several units such as the roller 1, the coil 21 and the unit 10 and so on.

Still according to a further embodiment not shown in details and as an alternative to the previous ones, the steam generator 4 with at least the buffer tank or with the tank for water to be steamed is made as a separate device in the form of a unit trailable by a tractor or in the form of a self-propelled unit. The delivery of the steam of the generator is connected through a flexible hose, possibly also woundable and unwoundable from a coil similar to the coil 20, to steam injectors/dispensers associated to the sterilization device.

Such variant can be provided in combination with the variant embodiment of the device made as a implement connectable to a power unit of figures 1 and 2, or with the variant embodiment wherein the device is made as self-propelled, that is firmly integrated in a vehicle such as shown in figure 3. In this case the steam generator 4 provided in these figures is not present, as well as the possible flexible hose that supplies water comprising the coil 10, the hose 20.

The generator 4 can be independent from a water intake, it being provided with tanks storing it or possibly the generator 4 according to such variant can be connected by a flexible hose 20 to a water distribution intake. The flexible hose 20 can be possibly also woundable and unwoundable from a coil similar to coil 21 shown in combination with shown embodiments.

## Claims

1. Method for soil steam sterilization providing the following steps:
- working the soil with a spading or tilling roller which is rotated about its own axis and contemporaneously moving the spading roller forward by a translation in a direction perpendicular to the axis of rotation;
- contemporaneously supplying sterilization or disinfection steam in the soil, with a predetermined pressure and with a predetermined temperature, in the soil area being worked by the spading roller or immediately adjacent to said spading roller,
**characterized in that**
said steam is fed from a shared horizontal manifold (3) by a row of tubes side by side with a predetermined length and distance one from the other extend, which tubes (2) are provided with steam dispensing nozzles (102) along their side walls,
generating a cloud or grid or curtain of steam jets extending substantially vertically and tangent or it is secant to said spading roller, behind it and such to be passed through by the trajectories of the soil lifted up by the spading roller and projected behind it, obtaining a step heating the soil dug and lifted by the spading roller before falling back in the furrow behind the spading roller.

2. Method according to claim 1, wherein it provides to contemporaneously inject or feed sterilization disinfection steam in the hollow, that is in the furrow dug by the roller **(1)** behind it with reference to the forward movement direction along the soil, in which hollow or furrow the soil is laid down projected rearwards and minced or pulverized by the spading roller that has passed through said sterilization or disinfection steam cloud.

3. Method according to claims 1 or 2 wherein the spading roller is rotationally driven about its own axis in a direction differing from the forward movement direction, that is in such a rotational direction that in the area in contact with the soil the direction of the spades is opposite to the forward movement direction.

4. Method according to one or more of the preceding claims, wherein said cloud or said curtain of sterilization steam is composed of a plurality of steam dispensing jets aligned, side by side with each other on a row parallel to the axis of the spading roller and oriented along horizontal directions, while at least some jets are oriented downwards, that is towards the soil.

5. Method according to one or more of the preceding claims, which provides to delimit towards the outside a region housing the spading roller leaving it open towards the soil and to feed steam inside said delimited region, preventing said steam cloud from spreading in the environment.

6. Method according to one or more of the preceding claims, which provides to cover the soil downstream the injection area and preferably downstream a region behind the spading or tilling roller wherein the loosened up material falls down on the worked soil and where steam has been injected.

7. Method according to claim 6 **characterized in that** such mulching is preferably performed by laying down sheets made of plastic material and/or other types of fibers retaining the steam.

8. Sterilizing device, for carrying out said method according to one or more of the claims 1 to 7, that is for the soil steam sterilization or disinfection comprising:
at least one spading and/or tilling roller (1) supported so as to rotate about its axis and rotationally driven by a motor;
a steam generator (4) with a predetermined pressure and with a predetermined temperature;
one or more dispensing nozzles (102, 202) supplying steam generated by said generator (4) for treating the soil being worked by the spading roller (1) and/or the worked region of the soil immediately adjacent thereto;
motorized means (31,41) for translating said spading roller (1), the steam generator (4) and the nozzles (102, 202),
**characterized in that**
steam dispensing nozzles (102) are fed by a shared horizontal manifold (3) and arranged along side walls of a row of tubes side by side with a predetermined length and distance one from the other extend,
such to form a steam cloud or curtain extending substantially vertically and tangent or it is secant to said spading roller, behind it and such to be passed through by the trajectories of the soil lifted up by the spading roller and projected behind it, obtaining a step heating the soil dug and lifted by the spading roller before falling back in the furrow behind the spading roller.

9. Device according to claim 8, wherein at least some steam dispensing nozzles (202) are oriented such to feed or inject steam in the furrow or hollow generated behind the spading roller (1) by its digging action, with reference to the forward movement direction of the device on the soil.

10. Device according to claims 8 or 9, **characterized in that** the spading roller (1) is driven so as to rotate about its own axis in a direction (F1) opposite to the translation direction (F2).

11. Device according to claim 10, **characterized in that** the spading roller (1) and steam dispensing nozzles (102, 202) are enclosed in a guard (6) that is open towards the soil side and is closed on the other sides and which guard delimits in the forward movement direction (F2) a front area where the roller penetrates in the soil by lifting material and an area behind the roller (1) where the material loosened up by the roller (1) is projected by it again on the soil, there being provided a grid of nozzles (102) arranged along a substantially vertical plane whose jets generate a steam cloud or curtain in the area behind the roller (1) passed through by the soil minced or pulverized and projected rearwards by the roller (1) and there being provided at least some nozzles (202) oriented towards the furrow or the hollow generated by the spading roller (1) behind it.

12. Device according to one or more of the preceding claims 8 to 11, wherein the arrangement of nozzles in the vertical plane is such to generate a steam cloud or curtain extending for the whole section of the compartment delimited by the guard, according to a plane vertical and perpendicular to the forward movement direction.

13. Device according to one or more of the preceding claims 8 to 12, **characterized in that** it provides in combination a unit (10,11) for unrolling and laying down on the soil a sheet of mulching material.

14. Device according to one or more of the preceding claims 8 to 13, **characterized in that** it is made alternatively according to one of the following two options:
- as an independent implement without its own propulsion means and possibly without the motorization for driving the spading/tilling roller, the steam generator (4) being optionally provided as a further implement combined with the roller (1) or separated from the roller (1);
- as a part firmly integrated with a self-propelled unit composed of a vehicle.

15. Device according to one or more of the preceding claims 8 to 14, **characterized in that** the steam generator comprises a limited capacity tank and that acts as a buffer tank to which water for steam generation is supplied through a flexible hose and a delivery pump, which flexible hose is wound as a coil on a wheel rotatable about an axis transverse to the forward movement direction and connecting to a stationary water intake, it being unwound from said coil contemporaneously with the forward movement of the device on the soil.

16. Device according to claim 15, **characterized in that** the steam generator (4), with at least the buffer tank or with the tank for the water to be steamed is made as a separate device in the form of a unit trailable by a power unit or as a self-propelled unit, while the delivery of the steam of the generator (4) is connected by a flexible hose, possibly also woundable and unwoundable from a coil, to steam injectors/nozzles associated to the sterilization device.

## Patentansprüche

1. Verfahren zur Bodensterilisation mit Dampf, das folgende Schritte umfasst:
- Bearbeiten des Bodens mit einer Spaten- oder Fräswalze, die um ihre eigene Achse drehbar ist, und gleichzeitiges Vorwärtsbewegen der Spatenwalze durch Translation in einer Richtung senkrecht zur Drehachse;
- gleichzeitiges Zuführen von Sterilisations- oder Desinfektionsdampf in den Boden mit einem vorbestimmten Druck und einer vorbestimmten Temperatur in den Bodenbereich, der von der Spatenwalze bearbeitet wird oder sich unmittelbar benachbart zur Spatenwalze befindet,
**dadurch gekennzeichnet, dass**
der Dampf von einem gemeinsamen horizontalen Sammler (3) durch eine Reihe von Rohren zugeführt wird, die sich nebeneinander mit einer vorbestimmten Länge und einem vorbestimmten Abstand zueinander erstrecken, wobei die Rohre (2) mit Dampfabgabedüsen (102) entlang ihrer Seitenwände versehen sind,
wobei eine Wolke oder ein Gitter oder ein Vorhang aus Dampfstrahlen erzeugt wird, die sich im Wesentlichen vertikal und tangential oder sekantenförmig zu der Spatenwalze hinter dieser erstrecken und von den Flugbahnen des von der Spatenwalze aufgehobenen und hinter diese geworfenen Bodens durchquert werden, wobei ein Schritt zur Erwärmung des von der Spatenwalze gegrabenen und aufgehobenen Bodens vor seinem Zurückfallen in die Furche hinter der Spatenwalze erzielt wird.

2. Verfahren nach Anspruch 1, **dadurch gekennzeichnet, dass** gleichzeitig Sterilisations- und Desinfektionsdampf in die Mulde, d.h. in die von der Walze (1) hinter sich in Bezug auf die Vorwärtsbewegungsrichtung entlang des Bodens gegrabene Furche, eingespritzt oder eingespeist wird, wobei in dieser Mulde oder Furche der Boden abgelegt wird, der rückwärts projiziert und von der durch die Sterilisations- oder Desinfektionsdampfwolke hindurchgegangenen Spatenwalze zerkleinert oder pulverisiert wird.

3. Verfahren nach Anspruch 1 oder 2, wobei die Spatenwalze um ihre eigene Achse in einer von der Vorwärtsbewegungsrichtung abweichenden Richtung drehend angetrieben wird, d. h. in einer solchen Drehrichtung, dass in dem mit dem Boden in Berührung kommenden Bereich die Richtung der Spaten entgegengesetzt zur Vorwärtsbewegungsrichtung ist.

4. Verfahren nach einem oder mehreren der vorhergehenden Ansprüche, wobei die Wolke oder der Vorhang aus Sterilisationsdampf aus einer Vielzahl von Dampfabgabestrahlen besteht, die nebeneinander in einer Reihe parallel zur Achse der Spatenwalze ausgerichtet und in horizontalen Richtungen orientiert sind, wobei zumindest einige Strahlen nach unten, d.h. zum Boden hin, orientiert sind.

5. Verfahren nach einem oder mehreren der vorhergehenden Ansprüche, das eine nach außen wirksame Begrenzung eines Bereichs zur Aufnahme der Spatenwalze vorsieht, wobei dieser Bereich zum Boden hin offen gelassen wird, und das die Zufuhr von Dampf in den begrenzten Bereich vorsieht, um die Ausbreitung der Dampfwolke in der Umgebung zu verhindern.

6. Verfahren nach einem oder mehreren der vorhergehenden Ansprüche, das das Bedecken des Bodens stromabwärts des Einspritzbereichs und vorzugsweise stromabwärts eines Bereichs hinter der Spaten- oder Fräswalze vorsieht, wobei das aufgelockerte Material auf den bearbeiteten Boden und auf die Stelle fällt, wo der Dampf eingespritzt worden ist.

7. Verfahren nach Anspruch 6, **dadurch gekennzeichnet, dass** ein solches Mulchen vorzugsweise durch Ablegen von Folien aus Kunststoffmaterial und/oder anderen Arten von dampfzurückhaltenden Fasern durchgeführt wird.

8. Sterilisiervorrichtung zur Durchführung des Verfahrens nach einem oder mehreren der Ansprüche 1 bis 7, d.h. für die Bodensterilisation oder -desinfektion mit Dampf, umfassend:
mindestens eine Spaten- und/oder Fräswalze (1), die so gelagert ist, dass sie sich um ihre Achse dreht und von einem Motor drehangetrieben wird,
einen Dampferzeuger (4) mit einem vorgegebenen Druck und einer vorgegebenen Temperatur;
eine oder mehrere Abgabedüsen (102, 202), die den von dem Generator (4) erzeugten Dampf zur Behandlung des von der Spatenwalze (1) bearbeiteten Bodens und/oder des unmittelbar angrenzenden bearbeiteten Bodenbereichs bereitstellen, sowie
motorisierte Mittel (31,41) zur Translation der Spatenwalze (1), des Dampferzeugers (4) und der Düsen (102, 202),
**dadurch gekennzeichnet, dass**
Dampfabgabedüsen (102) von einem gemeinsamen horizontalen Sammler (3) gespeist werden und entlang von Seitenwänden einer Reihe von Rohren angeordnet sind, die sich nebeneinander mit einer vorbestimmten Länge und einem vorbestimmten Abstand zueinander derart erstrecken, dass eine Dampfwolke oder ein Vorhang gebildet wird, die bzw. der sich im Wesentlichen vertikal und tangential oder sekantenförmig zu der Spatenwalze und hinter dieser erstreckt, so dass diese bzw. dieser von den Bahnen des von der Spatenwalze aufgehobenen und hinter sie geworfenen Bodens durchquert wird, wodurch ein Schritt zur Erwärmung des von der Spatenwalze gegrabenen und aufgehobenen Bodens vor seinem Zurückfallen in die Furche hinter der Stachelwalze erzielt wird.

9. Vorrichtung nach Anspruch 8, wobei zumindest einige Dampfabgabedüsen (202) so ausgerichtet sind, dass sie Dampf in die Furche oder Mulde einspeisen oder einspritzen, die hinter der Spatenwalze (1) durch ihre Grabwirkung in Bezug auf die Vorwärtsbewegungsrichtung der Vorrichtung auf dem Boden erzeugt wird.

10. Vorrichtung nach Anspruch 8 oder 9, **dadurch gekennzeichnet, dass** die Spatenwalze (1) so angetrieben wird, dass sie sich um ihre eigene Achse in einer Richtung (F1) entgegengesetzt zur Translationsrichtung (F2) dreht.

11. Vorrichtung nach Anspruch 10, **dadurch gekennzeichnet, dass** die Spatenwalze (1) und die Dampfabgabedüsen (102, 202) in einem zur Bodenseite hin offenen und zu den anderen Seiten hin geschlossenen Gehäuse (6) untergebracht sind und welches Gehäuse in Vorwärtsbewegungsrichtung (F2) einen vorderen Bereich abgrenzt, in dem die Walze in den Boden eindringt und dabei Material aufhebt, und einen Bereich hinter der Walze (1), in dem das von der Walze (1) aufgelockerte Material von ihr wieder auf den Boden geworfen wird, wobei ein Gitter von Düsen (102) vorgesehen ist, die entlang einer im Wesentlichen vertikalen Ebene angeordnet sind und deren Strahlen eine Dampfwolke oder einen Dampfvorhang in dem Bereich hinter der Walze (1) erzeugen, die/der von dem zerkleinerten oder pulverisierten und von der Walze (1) rückwärts geworfenen Boden durchquert wird und zumindest einige Düsen (202) vorgesehen sind, die auf die Furche oder die Mulde gerichtet sind, die von der dahinter liegenden Spatenwalze (1) erzeugt wird.

12. Vorrichtung nach einem oder mehreren der vorhergehenden Ansprüche 8 bis 11, bei der die Anordnung der Düsen in der Vertikalebene so beschaffen ist, dass eine Dampfwolke oder ein Dampfvorhang erzeugt wird, die bzw. der sich über den gesamten Querschnitt des durch das Gehäuse begrenzten Raums erstreckt, entsprechend einer Ebene, die vertikal und rechtwinklig zur Vorwärtsbewegungsrichtung ist.

13. Vorrichtung nach einem oder mehreren der vorhergehenden Ansprüche 8 bis 12, **dadurch gekennzeichnet, dass** sie in Kombination eine Einheit (10,11) zum Ausrollen und Ablegen einer Folie aus Mulchmaterial auf dem Boden aufweist.

14. Vorrichtung nach einem oder mehreren der vorhergehenden Ansprüche 8 bis 13, **dadurch gekennzeichnet, dass** sie alternativ nach einer der beiden folgenden Optionen ausgeführt ist:
- als eigenständiges Anbauteil ohne eigenen Antriebsmittel und ggf. ohne Motorisierung für den Antrieb der Fräswalze, wobei der Dampferzeuger (4) wahlweise als weiteres Anbauteil in Kombination mit der Walze (1) oder getrennt von der Walze (1) vorgesehen ist;
- als fest integrierter Teil einer aus einem Fahrzeug bestehenden selbstfahrenden Einheit.

15. Vorrichtung nach einem oder mehreren der vorhergehenden Ansprüche 8 bis 14, **dadurch gekennzeichnet, dass** der Dampferzeuger einen Tank mit begrenztem Fassungsvermögen umfasst, der als Puffertank dient, dem Wasser für die Dampferzeugung über einen flexiblen Schlauch und eine Förderpumpe zugeführt wird, wobei der flexible Schlauch als Spule auf ein um eine Achse quer zur Vorwärtsbewegungsrichtung drehbares Rad aufgewickelt ist und mit einem stationären Wasserzulauf verbunden ist, und zeitgleich mit der Vorwärtsbewegung der Vorrichtung auf dem Erdboden von dieser Spule abgewickelt wird.

16. Vorrichtung nach Anspruch 15, **dadurch gekennzeichnet, dass** der Dampferzeuger (4) mit mindestens dem Puffertank oder mit dem Tank für das zu bedampfende Wasser als getrennte Vorrichtung in Form einer durch ein Antriebsaggregat schleppbaren Einheit oder als selbstfahrende Einheit ausgeführt ist, während die Dampfabgabe des Generators (4) durch einen flexiblen, gegebenenfalls auch über eine Spule auf- und abwickelbaren Schlauch mit Dampfinjektoren/Düsen verbunden ist, die der Sterilisationsvorrichtung zugeordnet sind.

## Revendications

1. Méthode de stérilisation à la vapeur du sol, comprenant les étapes suivantes:
travailler le sol avec un rouleau à bêcher ou à labourer qui tourne autour de son propre axe et déplacer simultanément le rouleau à bêcher vers l'avant au moyen d'une translation dans une direction perpendiculaire à l'axe de rotation;
fournir simultanément de la vapeur de stérilisation ou de désinfection dans le sol, à une pression prédéterminée et à une température prédéterminée, dans la zone du sol étant travaillée par le rouleau à bêcher ou immédiatement adjacente audit rouleau à bêcher, **caractérisée en ce que** ladite vapeur est alimentée à partir d'un collecteur horizontal commun (3) au moyen d'une rangée de tubes côte à côte d'une longueur prédéterminée et s'étendant à une distance prédéterminée les uns des autres, lesquels tubes (2) sont pourvus de buses de distribution de vapeur (102) le long de leurs parois latérales, générant un nuage ou une grille ou un rideau de jets de vapeur s'étendant sensiblement verticalement et tangents ou sécants audit rouleau à bêcher, derrière celui-ci et de sorte à ce qu'il soit traversé par les trajectoires du sol soulevé par le rouleau à bêcher et projeté derrière celui-ci, obtenant une étape chauffant le sol creusé et soulevé par le rouleau à bêcher avant de retomber dans le sillon derrière le rouleau à bêcher.

2. Méthode selon la revendication 1, dans laquelle il est prévu d'injecter ou d'alimenter simultanément de la vapeur de stérilisation ou de désinfection dans le creux, c.à.d. dans le sillon creusé par le rouleau (1), derrière celui-ci en référence à la direction d'avancement vers l'avant le long du sol, dans lequel creux ou sillon le sol est déposé en étant projeté vers l'arrière et broyé ou pulvérisé par le rouleau à bêcher qui a traversé ledit nuage de vapeur de stérilisation ou de désinfection.

3. Méthode selon la revendication 1 ou 2, dans laquelle le rouleau à bêcher est entraîné en rotation autour de son propre axe dans une direction différente de la direction de mouvement vers l'avant, c.à.d. dans une direction de rotation telle que la direction des bêches est opposée à la direction d'avancement vers l'avant dans la zone en contact avec le sol.

4. Méthode selon l'une ou plusieurs des revendications précédentes, dans laquelle ledit nuage ou ledit rideau de vapeur de stérilisation consiste d'une pluralité de jets de distribution de vapeur alignés côte à côte les uns aux autres sur une rangée parallèle à l'axe du rouleau à bêcher et orientés selon des directions horizontales, tandis qu'au moins certains jets sont orientés vers le bas, c.à.d. vers le sol.

5. Méthode selon l'une ou plusieurs des revendications précédentes, laquelle méthode prévoit de délimiter vers l'extérieur une région abritant le rouleau à bêcher, le laissant donc ouvert vers le sol pour alimenter de la vapeur à l'intérieur de ladite région délimitée, empêchant donc ledit nuage de vapeur de se répandre dans l'environnent.

6. Méthode selon l'une ou plusieurs des revendications précédentes, laquelle méthode prévoit de recouvrir le sol en aval de la zone d'injection et de préférence en aval de la région derrière le rouleau à bêcher ou à labourer, dans laquelle la matière ameublie tombe sur le sol travaillé et où la vapeur a été injectée.

7. Méthode selon la revendication 6, **caractérisée en ce qu'**un tel paillage est de préférence réalisé en déposant des feuilles en matière plastique et/ou d'autres types de fibres retenant la vapeur.

8. Dispositif de stérilisation pour effectuer ladite méthode selon l'une ou plusieurs des revendications 1 à 7, c.à.d. pour la stérilisation ou la désinfection à la vapeur du sol, comprenant:
au moins un rouleau à bêcher et/ou à labourer (1) supporté de sorte à tourner autour de son propre axe et entraîné en rotation par un moteur;
un générateur de vapeur (4) à une pression prédéterminée et à une température prédéterminée;
une ou plusieurs buses de distribution (102, 202) fournissant la vapeur générée par ledit générateur (4) pour traiter le sol étant travaillé par le rouleau à bêcher (1) et/ou la région travaillée du sol immédiatement adjacente à celui-ci;
des moyens motorisés (31, 41) pour translater ledit rouleau à bêcher (1), le générateur de vapeur (4) et les buses (102, 202), **caractérisé en ce que**
les buses de distribution de vapeur (102) sont alimentées par un collecteur horizontal commun (3) et disposées le long de parois latérales d'une rangée de tubes côte à côte d'une longueur prédéterminée et s'étendant à une distance prédéterminée les uns des autres,
de sorte à former un nuage ou un rideau de vapeur s'étendant sensiblement verticalement et tangent ou sécant audit rouleau à bêcher, derrière celui-ci et de sorte à ce qu'il soit traversé par les trajectoires du sol soulevé par le rouleau à bêcher et projeté derrière celui-ci, obtenant une étape chauffant le sol creusé et soulevé par le rouleau à bêcher avant de retomber dans le sillon derrière le rouleau à bêcher.

9. Dispositif selon la revendication 8, dans lequel au moins certaines buses de distribution de vapeur (202) sont orientées de sorte à alimenter ou injecter de la vapeur dans le sillon ou creux généré derrière le rouleau à bêcher (1) au moyen de son action de creusement, en référence à la direction d'avancement vers l'avant du dispositif sur le sol.

10. Dispositif selon la revendication 8 ou 9, **caractérisé en ce que** le rouleau à bêcher (1) est entraîné de sorte à tourner sur son propre axe dans une direction (F1) opposée à la direction de translation (F2).

11. Dispositif selon la revendication 10, **caractérisé en ce que** le rouleau à bêcher (1) et les buses de distribution de vapeur (102, 202) sont incorporés dans un carter (6) qui est ouverte vers le côté sol et qui est fermée des autres côtés et qui délimite, dans la direction d'avancement vers l'avant (F2), une zone avant où le rouleau pénètre dans le sol en soulevant de la matière et une zone derrière le rouleau (1) ou la matière ameublie par le rouleau (1) est projetée par celui-ci sur le sol, une grille de buses (102) étant prévue disposée selon un plan sensiblement vertical dont les jets génèrent un nuage ou un rideau de vapeur dans la zone derrière le rouleau (1) traversée par le sol broyé ou pulvérisé et projeté vers l'arrière par le rouleau (1) et au moins certaines buses (202) étant prévues orientées vers le sillon ou le creux généré par le rouleau à bêcher (1) derrière celui-ci.

12. Dispositif selon l'une ou plusieurs des revendications précédentes 8 à 11, dans lequel la disposition des buses dans le plan vertical est telle qu'elle génère un nuage ou un rideau de vapeur s'étendant sur toute la section du compartiment délimité par le carter, selon un plan vertical et perpendiculaire à la direction d'avancement vers l'avant.

13. Dispositif selon l'une ou plusieurs des revendications précédentes 8 à 12, **caractérisé en ce qu'**il fournit en combinaison une unité (10, 11) pour dérouler et déposer sur le sol une feuille de matériau de paillage.

14. Dispositif selon l'une ou plusieurs des revendications précédentes 8 à 13, **caractérisé en ce qu'**il est réalisé alternativement selon l'une des deux options suivantes:
- comme un outil indépendant sans ses propres moyens de propulsion et éventuellement sans la motorisation pour l'entraînement du rouleau à bêcher/à labourer, le générateur de vapeur (4) étant éventuellement fournit comme un autre outil combiné avec le rouleau (1) ou séparé du rouleau (1);
- comme partie solidaire d'une unité automotrice consistant d'un véhicule.

15. Dispositif selon l'une ou plusieurs des revendications précédentes 8 à 14, **caractérisé en ce que** le générateur de vapeur comprend un réservoir à capacité limitée et qui agit comme un réservoir tampon auquel de l'eau pour la génération de vapeur est fournie au moyen d'un tuyau flexible et d'une pompe de refoulement, lequel tuyau flexible est enroulé en serpentin sur une roue rotative autour d'un axe transversal à la direction d'avancement vers l'avant et relié à une prise d'eau stationnaire, le tuyau étant déroulé dudit serpentin simultanément au mouvement d'avancement du dispositif sur le sol.

16. Dispositif selon la revendication 15, **caractérisé en ce que** le générateur de vapeur (4), avec au moins le réservoir tampon ou avec le réservoir pour l'eau à transformer en vapeur, est réalisé comme un dispositif séparé sous la forme d'une unité entraînable par une unité de puissance ou par une unité automotrice, tandis que le refoulement de vapeur du générateur (4) est relié au moyen d'un tuyau flexible, pouvant éventuellement également être enroulé autour et déroulé du serpentin, aux injecteurs/buses de vapeur associés au dispositif de stérilisation.
